(19) Europäisches Patentamt
European Patent Office
Office européen des brevets

(11) Veröffentlichungsnummer: **0 086 990**
**B1**

(12) # EUROPÄISCHE PATENTSCHRIFT

(45) Veröffentlichungstag der Patentschrift: **23.04.86**

(51) Int. Cl.[4]: **C 08 L 77/00,** C 08 K 5/52, C 08 K 5/34

(21) Anmeldenummer: **83100789.3**

(22) Anmeldetag: **28.01.83**

(54) **Witterungsstabile Polyamide.**

(30) Priorität: **09.02.82 DE 3204334**

(43) Veröffentlichungstag der Anmeldung: **31.08.83 Patentblatt 83/35**

(45) Bekanntmachung des Hinweises auf die Patenterteilung: **23.04.86 Patentblatt 86/17**

(84) Benannte Vertragsstaaten: **CH DE FR GB IT LI NL**

(56) Entgegenhaltungen:
**EP - A - 0 009 115**
**EP - A - 0 053 098**
**DE - A - 2 526 317**
**GB - A - 2 087 399**

(73) Patentinhaber: **BAYER AG, Konzernverwaltung RP Patentabteilung, D-5090 Leverkusen 1 Bayerwerk (DE)**

(72) Erfinder: **Brassat, Bert, Dr., Bethelstrasse 24, D-4150 Krefeld 1 (DE)**
Erfinder: **Buysch, Hans-Josef, Dr., Brandenburger Strasse 28, D-4150 Krefeld (DE)**
Erfinder: **Hermann, Karl Heinz, Dr., Scheibler Strasse 111, D-4150 Krefeld (DE)**
Erfinder: **Haupt, Heinrich, Dr., Bodelschwinghstrasse 15, D-4150 Krefeld (DE)**

**EP 0 086 990 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Polyamidformteile, die ungeschützt gegen Witterungseinflüsse eingesetzt werden, können unter dem Einfluss von Licht, Hitze, Sauerstoff und Nässe im Lauf der Zeit irreversible Veränderungen des Materials zeigen, welche die Funktionstüchtigkeit der Teile einschränken. Hierzu gehören unter anderem Absinken der Schlagzähigkeit, Abnahme der Reissdehnung, Glanzverlust und Farbabwanderung. Durch Einarbeiten von Witterungsstabilisatoren lässt sich das Auftreten dieser Schädigung beträchtlich verzögern.

Bekannte Witterungsstabilisatoren für Polyamide sind sterisch gehinderte Phenole, aromatische Amine, Phosphorigsäureester, Metallverbindungen wie Kupfer-, Mangan- und Nickelsalze oder -komplexe, gegebenenfalls in Kombination mit Synergisten wie Halogenverbindungen, ferner UV-Absorber wie z.B. Benzotriazolderivate oder substituierte Benzoesäurephenylester. Vielfach werden auch mehrere Substanzen aus den genannten Klassen miteinander kombiniert.

Die genannten Stabilisatoren beeinträchtigen zum Teil erheblich die Eigenschaften der Polyamide. So verschlechtern Metallverbindungen die elektrischen Eigenschaften, zeigen in Kombination mit bestimmten, insbesondere sulfidischen Pigmenten häufig Verfärbungserscheinungen und können bei Beregnung ausgewaschen werden. Mit aromatischen Aminen stabilisierte Polyamide neigen zu starker Verfärbung. Die Wirkung phenolischer Substanzen als Witterungsstabilisatoren ist im allgemeinen gering. Phosphorigsäureester können unter Hitzeeinwirkung bei Polyamiden starke Molekulargewichtsschwankungen verursachen, die zu Verarbeitungsschwierigkeiten führen können. UV-Absorber schliesslich müssen in relativ hoher Konzentration in Polyamide eingearbeitet werden, um einen nennenswerten Witterungsschutz zu bieten, was zu Farbverfälschungen (Vergilbung) führen kann.

In der DOS 2837027 wird der Einsatz von Phosphorigsäureestern der allgemeinen Formel I als Stabilisatoren für Polyamide beschrieben.

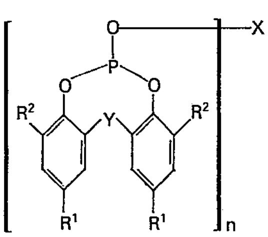

(I)

So stabilisierte Polyamide weisen eine hohe Wärmestabilität, gute Farbkonstanz, hervorragende elektrische Eigenschaften und ein günstiges Verarbeitungsverhalten auf. Ihre Witterungsstabilität ist für manche Einsätze aber nicht ausreichend.

Überraschend wurde nun gefunden, dass Kombinationen dieser Phosphorigsäureester mit bestimmten Indolverbindungen eine ausgezeichnete Wirkung als Witterungsstabilisatoren bieten.

Gegenstand der vorliegenden Erfindung sind daher witterungsstabile Polyamidformmassen, enthaltende 0,04 - 5 Gew.-% einer Stabilisatorkombination, bestehend aus

1) einem Phosphorigsäureester der allgemeinen Formel I

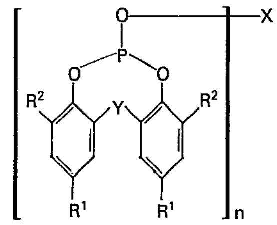

(I)

wobei

- $R^2$ einen Benzyl-, α-Methylbenzyl-, α, α-Dimethylbenzyl-, Cyclopentyl- oder Cyclohexylrest darstellt,
- $R^1$ einen Alkyl-, einen Cycloalkyl-, einen Aralkyl- oder einen Arylrest bedeutet.
- Y für S oder HC-$R^3$ steht, wobei $R^3$ = H, Alkyl- oder Cyclohexylrest sein kann,
- X ein Wasserstoffatom, einen gegebenenfalls substituierten ein- bis vierbindigen geradkettigen oder verzweigten alipathischen Rest, einen Aralkylrest oder einen aromatischen Rest bedeutet, wobei jeder der Reste olefinische Doppelbindungen und Heteroatome, vorzugsweise N, O und/oder S, enthalten kann, und
- n eine ganze Zahl von 1–4 bedeutet, mit der Bedingung, dass für X = H, n = 1 ist, und

2) einem Indolderivat der allgemeinen Formel II

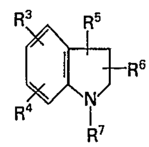

(II)

wobei

- $R^3$ bis $R^6$ gleich oder verschieden sind und ein Wasserstoffatom, einen Alkyl-, vorzugsweise mit $C_1$–$C_8$, Aryl-, vorzugsweise mit $C_6$–$C_{12}$, Aralkyl-, vorzugsweise mit $C_7$–$C_{12}$, Cycloalkyl-, vorzugsweise mit $C_5$–$C_6$, Hydroxy-, Alkoxy-, vorzugsweise mit $C_1$–$C_6$ oder Alkenylrest, vorzugsweise mit $C_2$–$C_8$, darstellen und
- $R^7$ einen Alkenyl-, vorzugsweise mit $C_2$–$C_{12}$, Aryl-, vorzugsweise mit $C_6$–$C_{12}$, oder Acylgruppe, vorzugsweise mit $C_2$–$C_{12}$, die mit weiteren Gruppen, welche Doppel- oder Dreifachbindungen enthalten können und/oder -$OR^8$, CN oder $COOR^8$-($R^8$ = $C_1$–$C_6$-Alkyl, Cycloalkyl, vorzugsweise mit $C_5$–$C_6$,)gruppen aufweisen können, substituiert sein kann, bedeutet.

Bevorzugte Stabilisatoren der Formel I sind solche mit

$R^1$ = Methyl

$R^2$ = Cyclo- alkyl mit 5 bis 6 C-Atomen,

Y = Schwefel oder -$CH_2$-,

X = H, Phenyl oder Alkyl mit $C_1$–$C_{18}$

Bevorzugte Stabilisatoren der Formel II sind solche mit
$R^3$ bis $R^5$ = H,
$R^6$ = Methyl,
$R^7$ = (gegebenenfalls mit CN oder $COOR^8$ substituiertes) Alkenyl mit $C_2$–$C_8$, wobei $R^8$ die nachfolgend angegebene Bedeutung hat.

Besonders bevorzugte Indolstabilisatoren sind solche der Formel III:

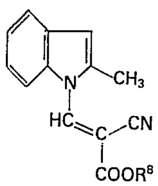

($R^8$ = Alkyl mit $C_1$–$C_6$) (III)

Die genannte Stabilisatorkombination wird in Mengen von 0,04 bis 5 Gew.-% bevorzugt von 0,1 bis 2 Gewichtsprozent, bezogen auf das Polyamid, eingesetzt. Die Menge der Stabilisatorkomponente 2) beträgt 0,02 bis 3 Gew.-%, bevorzugt 0,05 bis 1 Gewichtsprozent, bezogen auf das Polyamid.

Die Einarbeitung der Stabilisatorkombination erfolgt bevorzugt in die Polyamidschmelze unter Verwendung üblicher Mischvorrichtungen, wobei gegebenenfalls üblicherweise verwendete Zuschläge wie Gleit- und Entformungsmittel, Nukleierungsmittel, Pigmente, Farbstoffe, Füll- und Verstärkungsstoffe in üblichen Mengen zugemischt werden. Eine andere mögliche Einarbeitungsmethode ist die Zugabe als Konzentrat in reaktionsfähigen Monomerengemisch vor oder während der Polymerisation bzw. Polykondensation.

Bevorzugt lassen sich PA 6 und PA 66 stabilisieren.

Die erfindungsgemäss stabilisierten Polyamide werden bevorzugt zur Herstellung von Spritzgussformteilen oder extrudierten Teilen für den Ausseneinsatz benutzt, z.B. von Fahrzeugteilen, Sportgeräten, Sitzschalen, Abdeckungen oder Rohrleitungen.

Beispiele 1 bis 12

In ungefärbtes unverstärktes Polyamid 6 der relativen Viskosität $\eta_{rel}$ = 3,80 (gemessen in m-Kresol, c = 10g/l, bei 20°C) werden die in der Tabelle 1 angegebenen Stabilisatoren mit Hilfe eines Extruders homogen eingearbeitet. Das granulierte Material wird anchliessend zu Normkleinstäben verspritzt, die einer künstlichen Bewitterung im SKB-Weatherometer (Fa. Atlas) ausgesetzt werden. Das Gerät ist mit einer Filterlaterne mit 8 Corex-D-Filter ausgerüstet; die Proben werden abwechselnd jeweils 17 Minuten lang bestrahlt und 3 Minuten lang unter weiterer Bestrahlung mit dest. Wasser besprüht. Nach den in der Tabelle angegebenen Zeiten werden jeweils 10 Stäbe entnommen und einer Schlagprüfung nach DIN 53453 bei −20°C unterworfen. Die Ergebnisse sind der Tabelle 1 zu entnehmen.

Beispiele 7, 8 und 9 zeigen die Wirksamkeit erfindungsgemässer Stabilisatorkombinationen, die restlichen sind Vergleisbeispiele. Die in der zweiten Spalte angegebenen Chiffren stehen für Substanzen mit den folgenden Strukturformeln:

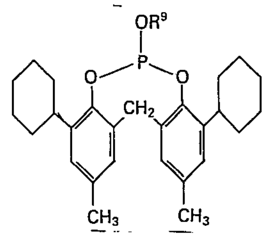

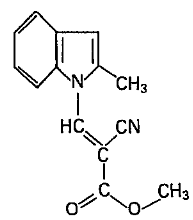

V

IV : $R^9$ = Phenyl
VIII : $R^9$ = $-(CH_2)_{17}-CH_3$
IX : $R^9$ = H

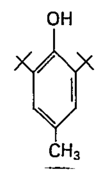

VI

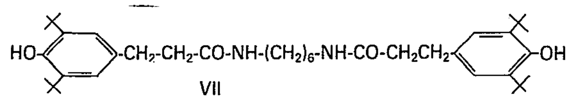

VII

Tabelle 1:
Auswirkung der Bewitterung auf die Schlagzähigkeit bei −20°C

| Beispiel | Stabilisator | Konzentration des Stabilisators % | Rest-Schlagzähigkeit ($kJ/m^2$) Bewitterungszeit 100 Std. | 200 Std. | 500 Std. | 1000 Std. | 1500 Std. |
|---|---|---|---|---|---|---|---|
| 1 | ohne | – | 5x25,1 x<br>5xn.g. | 13,1 | – | – | – |
| 2 | CuJ<br>KJ | 0,03<br>0,1 | n.g. | n.g. | 8xn.g.<br>2x22,3 | 2xn.g.<br>8x16,0 | 10,4 |
| 3 | VI | 0,5 | n.g. | n.g. | 6xn.g.<br>4x12,5 | 16,3 | – |
| 4 | VI<br>V | 0,5<br>0,2 | n.g. | n.g. | 9xn.g.<br>1x27,2 | 5,4 | – |

Tabelle 1: (Fortsetzung)

| Beispiel | Stabilisator | Konzentration des Stabilisators % | Rest-Schlagzähigkeit (kJ/m$^2$) Bewitterungszeit 100 Std. | 200 Std. | 500 Std. | 1000 Std. | 1500 Std. |
|---|---|---|---|---|---|---|---|
| 5 | IV | 0,5 | n.g. | 10,3 | – | – | – |
| 6 | V | 0,2 | n.g. | 6,1 | – | – | – |
| 7° | IV<br>V | 0,5<br>0,2 | n.g. | n.g. | 9xn.g.<br>1x52,7 | 8xn.g.<br>2x38,8 | 10,8 |
| 8° | VIII<br>V | 0,5<br>0,2 | n.g. | n.g. | n.g. | 7xn.g.<br>3x12,2 | 8,5 |
| 9° | IX<br>V | 0,5<br>0,2 | n.g. | n.g. | 6xn.g.<br>4x23,3 | 2xn.g.<br>8x20,3 | 6,9 |
| 10 | IX<br>Handelsübl. Lichtschutzmittel xx | 0,5<br>0,2 | n.g. | n.g. | 4xn.g.<br>6x18,5 | 8,8 | – |
| 11 | IX<br>Handelsübl. Lichtschutzmittel xxx | 0,5<br>0,2 | n.g. | n.g. | 2xn.g.<br>8x15,8 | 6,6 | – |
| 12 | VII<br>V | 0,5<br>0,2 | n.g. | n.g. | 8xn.g.<br>2x15,8 | 8,2 | – |

x n.g. = nicht gebrochen
xx Tinuvin 320® (Ciba-Geigy GmbH)
xxx Tinuvin 770® (Ciba-Geigy GmbH)
° erfindungsgemässe Beispiele

## Beispiele 13–16

Handelsübliches gefärbtes mit 40 Gew.-% Glasfasern verstärktes Polyamid 66 mit einer relativen Viskosität von $\eta_{rel}$ = 3,8 wurde jeweils durch einen Extruderdurchgang mit der erfindungsgemässen Kombination aus 0,2 Gew.-% des Indolderivats der Formel V und 0,5 Gew.-% des cyclischen Phosphorigsäureesters der Formel IV (Prozentgehalte bezogen auf Gesamtmenge PA 66 + Glasfasern) compoundiert. Zur Anwendung kamen je eine blaue, rote, grüne und gelbe Farbeinstellung, hergestellt mit für Polyamide gängigen Farbpigmenten. Das Material wurde zu hochglänzenden Plättchen der Grösse 4cm × 6cm verspritzt; diese wurden 400 Stunden lang im SKB-Weatherometer (Bedingungen vgl. Beisp. 1 bis 12) künstlich bewittert. Daneben wurden gleiche Plättchen aus gleichem, jedoch unstabilisiertem Material und gleichem, jedoch mit einem anorganischen Stabilisator auf Basis Kupfersalz/Halogenid ausgerüstetem Polyamid 66 Durethan AKV 40 H (Bayer AG) bewittert. Tabelle 2 gibt die Farbbabwanderung der bewitterten Plättchen gegenüber unbewitterten, gemessen in MAE nach Cielab, sowie für zwei Einstellungen den Glanzwert (Messungen am Multigloss, 60°, nach DIN 67503) vor und nach der Bewitterung wieder.

Tabelle 2:

| Beispiel | Farbe | Stabilisator | Farbabwandung (MAE) nach Bewittterung | Glanzwert (%) unbewittert | Glanzwert (%) nach Bewitterung |
|---|---|---|---|---|---|
| 13 | | erfindungsgemäss stabilisiert | 3,9 | 66 | 56 |
| | blau | Kupfer/Halogen | 3,2 | 84 | 56 |
| | | ohne | 5,6 | 71 | 31 |

Tabelle 2: (Fortsetzung)

| Beispiel | Farbe | Stabilisator | Farbabwandung (MAE) nach Bewittterung | Glanzwert (%) unbewittert | Glanzwert (%) nach Bewitterung |
|---|---|---|---|---|---|
| 14 | | erfindungsgemäss stabilisiert | 9,7 | 55 | 51 |
| | rot | Kupfer/Halogen | 15,1 | 64 | 43 |
| | | ohne | 25,8 | 86 | 38 |
| 15 | | erfindungsgemäss stabilisiert | 2,9 | | |
| | grün | Kupfer/Halogen | 14,8 | | |
| | | ohne | 19,4 | | |
| 16 | | erfindungsgemäss stabilisiert | 27,3 | | |
| | gelb | Kupfer/Halogen | 67,7 | | |
| | | ohne | 59,9 | | |

Beispiel 17

Handelsübliches verstärktes Polyamid 6 mit einem Glasfasergehalt von 30 Gew.-% und einer relativen Viskosität von $\eta$rel = 3,8 in roter Pigmentierung wurde durch einen Extruderdurchgang mit der Kombination aus 0,2% des Indolderivats der Formel V und 0,5% des cyclischen Phosphorigsäureesters der Formel IV (Prozentgehalte bezogen auf Gesamtmenge PA 6 + Glasfaser) compoundiert. Das Material wurde zu hochglänzenden Plättchen der Grösse 4 cm × 6 cm verspritzt. Diese wurden im SKB-Weatherometer (Bedingungen vgl. Beispiele 1 bis 12) künstlich bewittert. Als Vergleichsproben wurden Plättchen aus gleichem, jedoch unstabilisiertem Material derselben Behandlung unterworfen. Die nachfolgende Tabelle 3 gibt die Farbabwanderung der bewitterten Plättchen gegenüber unbewitterten, gemessen in MAE nach Cielab, in Abhängigkeit von der Bewitterungszeit wieder.

Tabelle 3

| Bewitterungszeit (Stunden) | Farbabweichung nach Cielab (MAE) stabilisierte Probekörper | unstabilisierte Probekörper |
|---|---|---|
| 400 | 1,7 | 50,4 |
| 800 | 10,4 | 50 |
| 1600 | 26,6 | 50 |

**Patentansprüche**

1. Witterungsstabile Polyamidformmassen, enthaltend 0,04–5 Gew.-% einer Stabilisatorkombination bestehend aus

1) einem Phosphorigsäureester der allgemeinen Formel

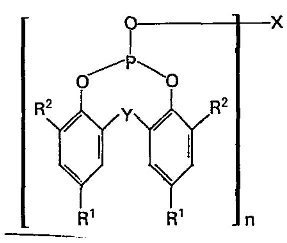

(I)

wobei

$R^2$ einen Benzyl-, α-Methylbenzyl-, α, α-Dimethylbenzyl-, Cyclopentyl- oder Cyclohexylrest darstellt,

$R^1$ einen Alkylrest, einen Cycloalkylrest, einen Aralkylrest oder einen Arylrest bedeutet,

Y für S oder HC-$R^3$ steht, wobei $R^3$ = H, Alkyl- oder Cyclohexylrest sein kann,

X ein Wasserstoffatom, einen gegebenenfalls substituierten ein- bis vierbindigen geradkettigen oder verzweigten aliphatischen Rest, einen Aralkylest oder einen aromatischen Rest bedeutet, wobei jeder der Reste olefinische Doppelbindungen und Heteroatome, vorzugsweise N, O und/oder S, enthalten kann, und

n eine ganze Zahl von 1–4 bedeutet, mit der Bedingung, dass für X = H, n = 1 ist, und

2) einem Indolderivat der allgemeinen Formel II

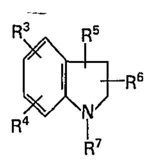

(II)

wobei

$R^3$ bis $R^6$, gleich oder verschieden, für ein Wasserstoffatom, einen Alkyl, Aryl-, Aralkyl-, Cycloalkyl-, Hydroxy-, Alkoxy- oder Alkylenrest stehen und

$R^7$ eine gegebenenfalls sustituierte Alkenyl-, Aryl- oder Acylgruppe bedeutet.

2. Polyamidformmassen nach Anspruch 1, enthaltend 0,1–2 Gew.-% der Stabilisatorkombination.

3. Polyamidformmassen nach Anspruch 1, dadurch gekennzeichnet, dass der Anteil der Stabilisatorkomponente 2, bezogen auf das Polyamid 0,02–3 Gew.-% beträgt.

4. Polyamidformmassen nach Anspruch 1 oder 2, dadurch gekennzeichnet, dass der Anteil der Stabilisatorkomponente 2, bezogen auf das Polyamid 0,05–1 Gew.-% beträgt.

5. Polyamidformmassen nach Ansprüchen 1–4, dadurch gekennzeichnet, dass in der allgemeinen Formel I

$R^1$ eine Methyl-, $R^2$ eine $C_5-C_6$ Cyclo-alkyl-, Y eine $-CH_2$-gruppe oder Schwefel und

X für ein Wasserstoffatom, eine Phenyl oder $C_1-C_{18}$ Alkylgruppe steht und in der allg. Formel II

$R^3-R^5$ für ein Wasserstoffatom

$R^6$ für eine Methylgruppe und

$R^7$ für eine gegebenenfalls substituierte Alkenylgruppe mit $C_2-C_8$ steht.

6. Polyamidformmassen nach Ansprüchen 1–5, dadurch gekennzeichnet, dass als Stabilisatorkomponente 2, Indolverbindungen der allgemeinen Formel III verwendet werden:

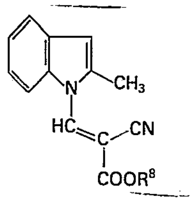

(III)

in der

$R^8$ für einen $C_1-C_6$ Alkylrest steht.

7. Polyamidformmassen nach Ansprüchen 1–6, dadurch gekennzeichnet, dass als Polyamide Polyamid-6 oder Polyamid-6,6 verwendet wird.

8. Polyamidformmassen nach Ansprüchen 1–7, dadurch gekennzeichnet, dass sie mit Glasfasern verstärkt sind.

9. Formkörper aus Polyamidformmassen nach Ansprüchen 1–8.

**Claims**

1. Weather-resistant polyamide moulding compositions, containing 0.04–5% by weight of a stabiliser combination consisting of

1) a phosphorous acid ester of the general formula

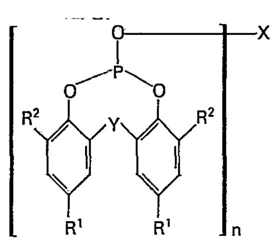

(I)

wherein

$R^2$ represents a benzyl, α-methylbenzyl, α, α-dimethylbenzyl, cyclopentyl or cyclohexyl radical,

$R^1$ denotes an alkyl radical, a cycloalkyl radical, an aralkyl radical or an aryl radical,

Y represents S or HC-$R^3$, wherein $R^3$ can be H, or an alkyl or cyclohexyl radical,

X denotes a hydrogen atom, an optionally substituted single-bond to four-bond straight-chain or branched aliphatic radical, an aralkyl radical or an aromatic radical, it being possible for each ot the radicals to contain olefinic double bonds and hetero atoms, preferably N, O and/or S, and

n denotes an integer from 1–4, with the proviso that n is 1 if X = H, and

2) an indole derivative of the general formula II

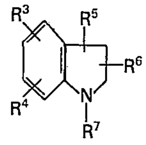

(II)

wherein

$R^3$ to $R^6$ are identical or different and represent a hydrogen atom, an alkyl, aryl, aralkyl, cycloalkyl, hydroxyl, alkoxy or alkenyl radical and

$R^7$ denotes an optionally substituted alkenyl, aryl or acyl group.

2. Polyamide moulding compositions according to Claim 1, containing 0.1–2% by weight of the stabiliser combination.

3. Polyamide moulding compositions according to Claim 1, characterised in that the content of stabiliser component 2, based on the polyamide, is 0.02–3% by weight.

4. Polyamide moulding compositions according to Claim 1 or 2, characterised in that the content of stabiliser component 2, based on the polyamide, is 0.05–1% by weight.

5. Polyamide moulding compositions according to Claims 1–4, characterised in that, in the general formula I

$R^1$ represents a methyl, $R^2$ a $C_5-C_6$ cycloalkyl an Y a $-CH_2$ group or sulphur and

X represents a hydrogen atom, or a phenyl or $C_1-C_{18}$ alkyl group and in the general formula II

$R^3-R^5$ represents a hydrogen atom,

$R^6$ represents a methyl group and

$R^7$ represents an optionally substituted alkenyl group with $C_2-C_8$.

6. Polyamide moulding compositions according to Claims 1–5, characterised in that indole compounds of the general formula III

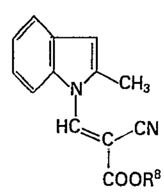

(III)

in which

$R^8$ represents a $C_1-C_6$ alkyl radical,

are used as the stabiliser component 2.

7. Polyamide moulding compositions according to Claims 1–6, characterised in that polyamide 6 or polyamide 6,6 are used as the polyamides.

8. Polyamide moulding compositions according to Claims 1–7, characterised in that they are reinforced with glass fibres.

9. Mouldings of polyamide compositions according to Claims 1–8.

**Revendications**

1. Mélanges à mouler à base de polyamide stables aux facteurs atmosphériques, contenant 0,04 à 5% en poids d'une association d'agents stabilisants constitués par

1) un ester d'acide phosphoreux de formule générale

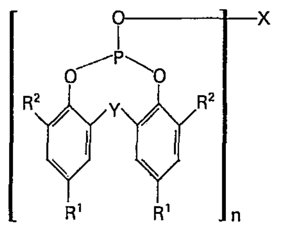

(I)

dans laquelle

$R^2$ représente un reste benzyxle, α-méthylbenzyle, α, α-diméthylbnzyle, cyclopentyle ou cyclohexyle,

$R^1$ désigne un rest alkyle, un reste cycloalkyle, un reste aralkyle ou un reste aryle,

Y représente S ou un groupe HC-$R^3$ dans lequel $R^3$ peut représenter H, un reste alkyle ou un reste cyclohexyle,

X est un atome d'hydrogène, un reste aliphatique à chaîne droite ou ramifié ayant une à quatre liaisons, éventuellement substitué, un reste aralkyle ou un reste aromatique, chacun des restes pouvant contenir des doubles liaisons oléfiniques et des hétéro-atomes, de préférence N, O et/ S, et

n est un nombre entier de 1 à 4, sous réserve que lorsque X représente H, n soit égal à 1, et

2) un dérivé d'indole de formule générale (II)

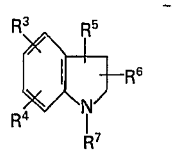

(II)

dans laquelle

$R^3$ à $R^6$, identiques ou différents, représentent un atome d'hydroegène, un reste alkyle, aryle, aralkyle, cycloalkyle, hydroxy, alkoxy ou alcényle et

$R^7$ est un groupe alcényle, aryle ou acyle éventuellement substitué.

2. Mélanges à mouler á base de polyamide suivant la revendication 1, contenant 0,1 à 2% en poids de l'association d'agents stabilisants.

3. Mélanges à mouler à base de polyamide suivant la revendication 1, caractérisés en ce que la proportion du composant stabilisant 2 s'élève à 0,02–3% en poids, par rapport au polyamide.

4. Mélanges à mouler à base de polyamide suivant la revendication 1 ou 2, caractérisés en ce que la proportion de composant stabilisant 2, par rapport au polyamide, s'élève à 0,05–1% en poids.

5. Mélanges à mouler suivant les revendications 1 à 4, caractérisés en ce que la formule générale I,

$R^1$ désigne un groupe méthyle, $R^2$ désigne un groupe cycloalkyle en $C_5-C_6$, Y est un groupe $-CH_2-$ ou du soufre et

X est un atome d'hydrogène, un groupe phényle ou un groupe alkyle en $C_1$ à $C_{18}$ et dans la formule générale II

$R^3$– $R^5$ représentent un atome d'hydrogène,

$R^6$ est un groupe méthyle et

$R^7$ est un groupe alcényle en $C_2$ à $C_8$ éventuellement substitué.

6. Mélanges à mouler à base de polyamide suivant les revendications 1 à 5, caractérisés en ce qu'on utilise comme composant stabilisant 2 des composés indoliques de formule générale III:

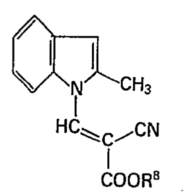

(III)

dans laquelle

$R^8$ est un reste alkyle en $C_1$ à $C_6$.

7. Mélanges à mouler à base de polyamide suivant les revendications 1 à 6, caractérisés en ce qu'on utilise comme polyamides du polyamide-6 ou du polyamide-6,6.

8. Mélanges à mouler à base de polyamide suivant les revendications 1 à 7, caractérisés en ce qu'ils son renforcés avec des fibres de verre.

9. Pièces moulées obtenues à partir de mélanges à mouler à base de polyamide suivant les revendications 1 à 8.